# EUROPEAN PATENT SPECIFICATION

(11) **EP 0 628 604 B1**
(45) Date of publication and mention of the grant of the patent: **20.10.1999**
(21) Application number: 94303976.8
(22) Date of filing: 02.06.1994
(51) Int. Cl.: C08L 83/07, C08L 83/05, C08L 83/04

(54) **Curable Polysiloxanes compositions**
Härtbare Polysiloxane Zusammensetzungen
Compositions réticulables de polysiloxanes

(30) Priority: 09.06.1993 GB 9311853
(43) Date of publication of application: 14.12.1994
(73) Proprietor: DOW CORNING GmbH, D-65201 Wiesbaden (DE)
(72) Inventor: Bentz, Peter Otto, D-65232 Taunusstein (DE)
(74) Representative: Bullows, Michael

(56) References cited:
- EP-A- 0 409 229
- EP-A- 0 410 697
- EP-A- 0 489 391
- EP-A- 0 506 372
- EP-A- 0 581 539
- US-A- 4 374 967

## Description

This invention is concerned with curable compositions and with articles formed therefrom.

It is known to use curable compositions for the production of flexible silicone rubber articles. Suitable curable compositions cure without heat by a condensation reaction which involves crosslinking of hydroxy end-blocked polysiloxane chains through siloxane linkages accompanied by release of a condensation product, e.g. an alcohol from an alkoxy silane crosslinking agent, in the presence of a suitable catalyst. These curable compositions have many useful properties but their use entails the production and evaporation of condensation products as aforesaid during cure and shortly thereafter. This causes shrinkage of the cured rubber articles.

In cases where dimensional accuracy is required, curable compositions are used which cure without elimination of by-products and which do not shrink upon curing. These compositions generally comprise a polysiloxane having vinylorganosiloxane units, an organohydrogen polysiloxane and finely divided filler and cure by a hydrosilylation reaction in the presence of a noble metal catalyst. Such compositions may comprise, for example, as the polysiloxane having vinylorganosiloxane units and finely divided filler, vinyl terminated polydimethylsiloxanes and finely divided silica treated in the composition to render it hydrophobic by the presence of hexamethyl disilazane, or a high viscosity vinyl terminated polydimethylsiloxane, vinylsiloxane resin and finely divided inert extending filler for example ground quartz; compositions of the first mentioned type cure to strong rubbers by virtue of the silica and compositions of the second type do so by virtue of the presence of the resin. Generally, such compositions have, when mixed, a viscosity of the order of from about 50 Pa.s to about 100 Pa.s and after curing exhibit maximum elongation-to-break values of the order of 300% to 400% and tear strength values of the order of about 10 to 20 kN/m.

In EP 409 229A2 there is described an addition-type silicone rubber composition which comprises an organopolysiloxane containing at least two alkenyl groups bonded to a silicon atom in one molecule, an organohydrogen polysiloxane containing at least two silicon bonded hydrogen atoms per molecule, a platinum catalyst and an additive consisting of an organopolysiloxane containing one silicon-bonded alkenyl group on average per molecule. The application is concerned with compositions which, when cured, form elastomers with low modulus; in order to achieve this there must be present in the curable com-position an alkenyl polysiloxane having one silicon-bonded alkenyl group per molecule.

US 4,946,878 discloses an addition type curable composition which comprises a diorganoalkenyl siloxy terminated polydiorganosiloxane having a viscosity of at least 12Pa.s. containing substantially no ethylenically unsaturated hydrocarbon radicals bonded to non-terminal silicon atoms, a diorganoalkenyl siloxy terminated polysiloxane having pendant alkenyl functionality, a curing agent which is an organohydrogen siloxane having an average of more than two silicon-bonded hydrogen atoms per molecule, a platinum catalyst and reinforcing silica filler. This application teaches that replacement of certain hexenyl groups with vinyl groups as the alkenyl groups referred to above results in increased cure rates. The application does not address the formation of high strength elastomers from low viscosity starting materials.

EP 506,372 teaches a solventless and high solidscontaining silicone pressure sensitive adhesive. The compositions therein comprise a toluene-soluble resinous copolymer containing R₃SiO_{1/2} units and SiO_{4/2} units, a vinyl-terminated polydiorganosiloxane, a hydrogen-terminated polydiorganosiloxane, a hydrosilylation catalyst and up to 10 weight percent of an organic solvent. This reference, however, does not teach or suggest using 2 distinct vinylated polysiloxanes.

EP 489,391 teaches increasing the cure strength of organosiloxane elastomers by mixing a vinyl terminated polydiorganosiloxane, a vinyl-terminated polydiorganosiloxane having 1 to 5 mole percent alkenyl radicals at non-terminal positions an organohydrogensiloxane having more than 2 silicon bonded hydrogen atoms per molecule and a catalyst. This reference, however, does not teach the organohydrogensiloxane of the present invention or the viscosity of such materials.

For many applications it is necessary to have a curable composition which when mixed has a viscosity which is low.

Often it is desirable to have a composition which when mixed has an initial viscosity of not more than 20 Pa.s and after curing exhibits a maximum elongation-to-break value of greater than 400% and a tear strength value of the order of about not less than 20 KN/m.

It is known that the viscosity of a curable composition when mixed may be at a low level if the polysiloxanes used are of a low molecular weight, but this practice leads to cured rubbers having poor elastomeric properties, i.e. low tear strength and low elongation to break.

It is one of the various objects of the present invention to provide an improved composition curable by a hydrosilylation reaction which when mixed has a low viscosity, does not shrink upon curing and has good elastomeric properties.

Surprisingly, we have now found that one may provide a composition of low initial viscosity which is curable to an elastomer displaying an improved combination of properties by the use of polysiloxanes having selective placement of certain alkenyl functionality and hydrido functionality in terminal and pendant positions to the polysiloxane chain.

The present invention provides in one of its aspects a curable composition comprising a polysiloxane comprising units according to the formula (i) RₐR'_{b}SiO_{[4-(a + b)]/2} there being not less than two groups R' per molecule and a polysiloxane (A) comprising units according to the general formula (ii) RₐH_{b}SIO_{[4-(a + b)]/2} there being not less than two groups H per molecule wherein R represents a monovalent hydrocarbon group, R' represents an aliphatic unsaturated group, a has a value 1, 2 or 3 and b has a value 0 or 1, finely divided filler and a noble metal catalyst characterised in that the polysiloxane having units according to the general formula (i) comprises a mixture of polysiloxanes having viscosities at 25°C of not greater than 10 Pa.s, one having not more than two units in which b has the value 1 and one having not less than three units in which b has the value 1, the polysiloxane (A) having units according to the general formula (ii) comprises a polysiloxane having a viscosity at 25°C of not greater than 10 Pa.s and having not more than two units in which b has the value 1 and the mixture of polysiloxanes in the curable composition has a viscosity of less than 20 Pa.s at 25°C.

In a composition according to the invention the group R' of the polysiloxanes having units according to the formula (i) RₐR'_{b}SiO_{[4-(a+b)]}_{/2} is an aliphatic unsaturated group and may be for example a group comprising -CH=CH₂ linked to the silicon atom by a divalent aliphatic chain, for example a vinyl, allyl or hexenyl group. The poly-siloxanes may be linear or branched i.e. may contain siloxane units RₐR'_{b}SiO_{[4-(a+b)]/2} in which a is 1, 2 or 3 and may have chain terminating units R₂R'SiO_{1/2} or R₃SiO_{½}. Preferably each is according to the general formula (I) R₂R'SiO[R'RSiO]ₙ[R₂SiO]ₘSiR'R₂ wherein m has a value from 1 to 1000 and n has a value from 0 to 100. We prefer to employ a mixture of polysiloxanes of which one is according to the general formula R₂R'SiO[R'RSiO]ₙ[R₂SiO]ₘSiR'R₂ in which m is from 20 to 200, for example 150 and n is 0 and one is according to the same general formula in which m is as mentioned above and n is from 2 to 20 for example 5. The group R' may be exclusively vinyl for both preferred polysiloxanes or may be vinyl in the polysiloxane having n = 0 and hexenyl in the case where n = from 2 to 20. These polysiloxanes have values of m and n such that they have viscosities at 25°C of not greater than 100 Pa.s and preferred materials have viscosities at 25°C of not greater than 10 Pa.s in the case where n = 0 and of not greater than 1 Pa.s in the case where n = 2 to 5.

A composition according to the invention comprises a polysiloxane (A) consisting of two units according to the general formula (ii) RₐHSiO_{[3-a]/2} there being two silicon bonded H atoms per molecule wherein R represents a monovalent hydrocarbon group and a is 1 or 2 and units RₐSiO_{(4-a)/2} in which a is 1, 2 or 3. Preferably the polysiloxane (A) is according to the general formula (II) R_{c}H_{b}SiO[R₂SiO]ₚ[RHSiO]_{q}SiH_{b}R_{c} wherein b has a value 0 or 1 c has a value 1, 2 or 3, b + c = 3, p has a value from 1 to 50 and q has a value 0 or 2, provided that there are not more than two silicon-bonded H-atoms per molecule. We prefer to use a polysiloxane (A) in which b is 1, c is 2 and q is 0. The polysiloxane (A) has values of p and q such that it has a viscosity at 25°C of not greater than 0.2 Pa.s and a preferred material has a viscosity at 25°C of not greater than 0.015 Pa.s.

In a composition according to the invention the group R of the polysiloxanes is a monovalent hydrocarbon group and may be for example, a monovalent hydrocarbon group having up to 20 carbon atoms, for example a lower alkyl, e.g. a methyl group or phenyl group.

A composition according to the invention includes a noble metal catalyst which may be for example a rhodium or platinum containing material. Platinum catalysts may take any of the known forms, ranging from platinum as deposited on carriers such as silica gel or powdered charcoal to platinic chloride, salts of platinum, chloroplatinic acids and encapsulated forms thereof. A preferred form of platinum is chloroplatinic acid either as the commonly obtainable hexahydrate or the anhydrous form, on account of its easy dispersibility in organosilicone compositions and its non-effect on colour of the mixture. Platinum com-plexes may also be used e.g. those prepared from chloro platinic acid hexahydrate and divinyl tetramethyl-disiloxane.

A composition according to the invention may also comprise a finely divided filler. We prefer to use a mixture of reinforcing filler (e.g. precipitated or fumed silicas which may be pretreated or treated in situ to render them hydrophobic) and extending fillers (e.g. ground quartz, titania, zirconium silicate and ferric oxide) . Precipitated silica having a particle size of 1.0 to 0.01Tm, preferably 0.05 to 0.02Tm is preferred when ease of spreading of the composition is desired. Ground quartz of particle size 1.0 to 30 Tm, preferably 5.0 to 15Tm is preferred as the extending filler when ease of mixing is desired. The reinforcing fillers tend to lead to higher viscosity materials when the ingredients are mixed and which cure to rubbers of higher modulus and therefore lower proportions i.e. less than about 50 parts of reinforcing filler per hundred parts of the polysiloxanes are preferred. The extending fillers may be used in pro-portions of 0 to 100 parts per hundred parts of the polysiloxanes.
A curable composition according to the invention may also comprise a polysiloxane (B) comprising units according to the general formula (ii) RₐH_{b}SiO_{[4-(a+b)]}_{/2} and having three or more silicon-bonded hydrogen atoms per molecule wherein R is as hereinabove defined, a has a value of 1,
2 or 3 and b has a value 0 or 1. The polysiloxane (B) may be linear or branched i.e. may contain units RₐSiO_{(4-a)/2}. Preferably the polysiloxane (B) is according to the general formula R_{c}H_{b}SiO[R₂SiO]ₚ[RHSiO]_{q}SiH_{b}R_{c} wherein b has a value 0 or 1, c has a value of 1, 2 or 3, b + c = 3, p has a value from 1 to 50 and q has a value 1 to 20, provided that there are not less than 3 silicon-bonded hydrogen atoms per molecule. A more preferred polysiloxane (B) is one in which b is 0, c is 3, p is 3 and q is 5. The polysiloxane (B) has values of p and q such that it has a viscosity at 25°C of not greater than 0.2 Pa.s and preferred materials have a viscosity at 25°C of not greater than 0.005 Pa.s.

A composition according to the invention may also comprise additives for example dyes, plasticisers, e.g. trimethylsilyl end-blocked polydimethylsiloxanes or pigments.

The polysiloxanes having groups R' are reactive with the silicon-bonded hydrogen atoms of the polysiloxane or polysiloxanes having units according to the general formula (ii) RₐH_{b}SiO_{[4-(a + b)]/2} in the presence of a noble metal catalyst by a hydrosilylation reaction and thus contribute to the polysiloxane matrix of the cured composition via chain extension to build up longer chain polysiloxanes and by crosslinking to provide polysiloxane chains bonded between the longer chain polysiloxanes. The proportion of terminal and pendant reactive groups is selected in order to give the desired combination of elastomeric properties. Further, it is believed that in absence of vinyl groups available for hydrosilylation, hexenyl groups undergo hydrosilylation more rapidly than do vinyl groups. When rapid end cure is desired, we prefer to employ at least one polysiloxane having the units [R'RSiO]ₙ as aforesaid (i.e. pendant R' groups) in which n has a value of 2 to 5 and in which R' represents a hexenyl group. Compositions in which R' is hexenyl exhibit faster final throughcure than those which use instead the equivalent polysiloxane in which R' is vinyl. For example, a composition containing a poly-siloxane having 5 methyl hexenyl siloxane units is tackfree after 24 hours at room temperature, whereas an identical formulation containing a polysiloxane having 5 methyl vinyl siloxane units has a much higher surface tackiness and yields a softer product under identical cure conditions.

Curable compositions according to the invention may be formed of two or more parts which can be mixed in a chosen ratio to provide a room temperature curable composition in which the mixture of polysiloxane has a viscosity of less than 20 Pa.s at 25°C and, when cured, an elongation-to-break in excess of 400% and a tear strength of not less than 20KN/m. These room temperature curable compositions or room tem-perature vulcanisable (RTV) compositions may be formulated conveniently in a number of different ways provided the catalyst is stored separately from Si-H containing poly-siloxane material. Generally the composition is of two parts with the alkenylpolysiloxane material and catalyst stored in one part and the Si-H containing polysiloxane material stored in the other. Preferably these curable compositions additionally comprise one of the well known platinum catalyst inhibitors, for example a polymethyl-vinylsiloxane cyclic compound or an acetylenic alcohol, eg methyl butynol as inhibitor. Preferred compositions when mixed cure at room temperature within 24 hours. If desired cure may be accelerated by heating to temperatures of from 50 to 150°C.
Curable compositions according to the invention in two or more parts are useful in a wide variety of applications known for RTV's for example as coating, caulking and insulating materials and are particularly suitable for mould making applications. The low viscosity of the mixture at the time of application facilitates proper flow of the composition into full conformity with the surface of the original in order to faithfully reproduce details of a surface onto which they are applied without causing damage to the original surface and the high tear strength combined with a high tensile strength and a high elongation to break enable ease of demoulding of the cured material from the original and of replicates from the mould so formed.

Alternatively, curable compositions according to the invention may be formed as one-part curable compositions in which the mixture of polysiloxanes has a viscosity of less than 20 Pa.s. and when cured have an elongation-to-break in excess of 400% and a tear strength of not less than 20 KN/m. One part compositions contain all the reactive components in admixture and therefore require use of means to isolate or inhibit the catalyst to ensure the hydrosilylation reaction does not occur prematurely. Suitable inhibitors include those inhibitors hereinabove described. Due to the presence of inhibitor the one part compositions are unreactive at ambient temperature and are storage stable for several months at ambient temperature but react at elevated temperature e.g. 50°C to 150°C and cure within 2 to 3 minutes to provide elastomeric products.
One part heat curable compositions according to the invention are useful in many applications where low initial viscosity of the curable composition is desirable for example in extrusion processes where a low viscosity composition may be easily extrudable under a low injection pressure and in coating applications where a composition may be coated evenly over a suitable substrate without the need for processing aids, e.g. organic diluents.

There now follows a series of examples which illustrate the invention. Example 1 describes a composition illustrative of the invention; Example 2 describes two compositions illustrative of the invention and compares the properties of these compositions with two comparative compositions; Example 3 compares the cure rate of the illustrative compositions of Example 2. All parts referred to are parts by weight and viscosity is measured at 25°C.

### Example 1

A base material (base 1) was prepared from 45.7 parts of a first vinyl terminated polysiloxane according to the general formula (I), in which R represents methyl, R' repesents vinyl n=0, m = 450 having a viscosity of 2 Pa.s, 29.3 parts finely divided silica, 5 parts hexamethyldisilazane and 2 parts water. The ingredients were mixed and heated to 150°C, then mixed under vacuum at 150°C to remove all volatile compounds. Then 20.3 parts of the first vinyl terminated polysiloxane, 7.0 parts of a first hexenyl-terminated polydimethyl methylhexenyl siloxane according to the formula (I) in which R represents methyl, R' represents hexenyl, m = 147, n = 3, having a viscosity of 0.25 Pa.s, 1.0 part white pigment as inert filler and 0.15 part PC072 catalyst as purchased from Huels Inc., formerly Petrarch Inc., (3.0 to 3.5% complex of platinum with divinyltetramethyldisiloxane in xylene) were mixed in. A curing agent was prepared from 20.5 parts of the first vinyl terminated polysiloxane, 78 parts of a first hydrido polysiloxane according to the formula (II) in which R represents methyl, b = 1, c = 2, p = 10, q = 0 and having a viscosity of 0.015 Pa.s. and 1.5 parts of cyclomethylvinylsiloxane. The base and curing agent were mixed in a ratio of 10:1 by weight to form an illustrative composition and had upon mixing a viscosity of 12 Pa.s. When cured for 24 hours at room temperature the material had a hardness (Shore A) of 25 and had a tack-free surface.

### Example 2

### First Comparative Example Composition.

A base material was prepared from 62.4 parts of a vinyl terminated polydimethylsiloxane of 35 Pa.s viscosity at 25°C containing vinylated MQ-resin of 35 Pa.s viscosity at 25°C, 37.4 parts ground quartz and 0.1 part of a 2 weight percent complex of platinum with divinyltetramethyldisiloxane in vinyl terminated polydimethylsiloxane. A curing agent was prepared from 64.2 parts of the vinyl terminated polydimethylsiloxane of 35 Pa.s viscosity containing vinylated MQ-resin, 29.9 parts trimethyl-siloxy terminated polydimethyl methylhydrogen siloxane with an average of five methylhydrido siloxane units and 3 dimethylsiloxane units and a viscosity of 0.005 Pa.s, 0.9 parts cyclomethylvinylsiloxane and 5 parts inorganic pigment. The base and curing agent when mixed 10 : 1 by weight had a viscosity of 90 Pa.s at 25°C. When cured for at least 24 hours at room temperature (20°C) the cured material had a hardness (Shore A) of 56, tear strength of 15 kN/m, maximum elongation to break of 300 % and tensile strength of 4.3 MPa.

### Second Comparative Example Composition.

A base material was prepared from 22 parts of a vinyl terminated polydimethylsiloxane containing vinylated MQ-resin having a viscosity of 2 Pa.s at 25°C, 25.2 parts of a vinyl terminated polydimethylsiloxane having a viscosity of 2 Pa.s at 25°C, 21 parts vinyl terminated polydimethylsiloxane of viscosity 12 Pa.s at 25°C, 21.1 parts fumed silica, 5.2 parts hexamethyldisilazane and 2.1 parts water. The ingredients were mixed and heated to 150°C, then mixed under vacuum at 150°C to remove all volatile compounds, then 3.1 parts inorganic pigment and 0.2 part 2 weight percent complex of platinum with divinyltetramethyldisiloxane in vinyl terminated polydimethylsiloxane were added. A curing agent was prepared from 64 parts of the vinyl terminated polydimethylsiloxane of 2 Pa.s at 25°C containing vinylated MQ-resin of 2 Pa.s at 25°C, 34 parts of the trimethylsiloxy terminated polydimethyl methyl hydrogen siloxane with an average of five methylhydrido siloxane units and three dimethyl siloxane units and 2 parts cyclomethylvinylsiloxane. The base and curing agent when mixed 10 : 1 by weight had a viscosity of 52 Pa.s. at 25°C. When cured for at least 24 hours at room temperature the material had a hardness (Shore A) of 38, tear strength of 19 kN/m, maximum elongation at break of 360% and tensile strength of 6 MPa.

### Illustrative Example Composition 1

A base material was prepared from 45.7 parts of the first vinyl terminated polysiloxane of Example 1, 29.3 parts finely divided silica, 5 parts hexamethyldisilazane and 2 parts water. The ingredients were mixed and heated to 150°C, then mixed under vacuum at 150°C to remove all volatile compounds. 20.3 parts of the first vinyl terminated polydimethylsiloxane, 7.0 parts of a second vinyl terminated polydimethyl vinyl methyl siloxane according to the formula (I) in which R represents a methyl group, R' represents vinyl, n = 3, m = 147 having a viscosity of 0.25 Pa.s, 1.0 part white pigment as inert filler and 0.15 part PC072 catalyst were added and mixed. A curing agent was prepared from 33 parts of the first vinyl terminated polysiloxane, 64 parts of the first hydrido polydimethylsiloxane, 1.5 parts of a second hydrido polysiloxane according to the formula (II) in which R represents methyl, b=0, c=3, p=3, q=5 having a viscosity of 0.005 Pa.s and 1.5 parts cyclomethylvinylsiloxane. The base and curing agent were mixed in a ratio of 10 : 1 by weight and had, upon mixing a viscosity of 14 Pa.s. When cured for 24 hours at room temperature the material had a hardness (Shore A) of 19, tear strength of 23 kN/m, maximum elongation at break of 890 % and tensile strength of 4.8 MPa. The cured material had a tacky surface.

### Illustrative Example Composition 2

A base material (base 1) was prepared according to the procedure of Example 1. A curing agent was prepared from 33 parts of the first vinyl terminated polysiloxane, 64 parts of the first hydrido terminated polydimethylsiloxane, 1.5 parts of the second hydrido polysiloxane and 1.5 parts cyclomethyl-vinylsiloxane. The base and curing agent were mixed in a ratio of 10 : 1 by weight and had upon mixing a viscosity of 14 Pa.s. When cured for 24 hours at room temperature the material had a hardness (Shore A) of 29, tear strength of 27 kN/m, maximum elongation at break of 850% and tensile strength of 5.3 MPa. The material had a surface which was not tacky.

### Example 3

Illustrative composition 1 and illustrative composition 2 were each cured at 66°C an a Monsanto rheometer with die movement of +/- 5°C.

| Tx | T10 | T50 | T90 |
|---|---|---|---|
| Compositions 1 | 4.8 | 5.9 | 8.0 |
| Compositions 2 | 2.4 | 2.6 | 4.0 |
| Tx = Time (minutes) for torque to reach x% of its final value. | | | |

Example 3 illustrates the difference in the rate of cure of a composition having a vinyl terminated polydimethylsiloxane chain extender in conjunction with a multi-vinyl functional polymer as crosslinker (illustrative composition 1) and a formulation having a vinyl terminated polymer in conjunction with a multifunctional hexenyl polymer as crosslinker (illustrative composition 2).

## Claims

1. A curable composition comprising a polysiloxane comprising units according to the formula
(i) RₐR'_{b}SiO_{[4-(a+b)]}_{/2} there being not less than two groups R' per molecule, a polysiloxane (A) comprising units according to the general formula (ii) RₐH_{b}SiO_{[4-(a + b)]}_{/2} there being not less than two groups H per molecule, finely divided filler and a noble metal catalyst, wherein R represents a monovalent hydrocarbon group, R' represents an aliphatic unsaturated group, a has a value 1, 2 or 3 and b has a value 0 or 1 characterised in that:
the polysiloxane having units according to the general formula (i) comprises a mixture of polysiloxanes having viscosities at 25°C of not greater than 10 Pa.s, one having not more than two units in which b has the value 1 and one having not less than three units in which b has the value 1;
the polysiloxane (A) having units according to the general formula (ii) is a poly-siloxane having a viscosity at 25°C of not greater than 0.2 Pa.s having not more than two units in which b has the value of 1; and
the mixture of polysiloxanes in the curable composition has a viscosity of less than 20 Pa.s at 25°C.

2. A curable composition according to Claim 1 further characterised in that the curable composition also comprises a polysiloxane (B) having units according to the general formula (ii) RₐH_{b}SiO_{[4-(a + b)]/2}, a viscosity at 25°C of not greater than 10 Pa.s. and not less than three units in which b has a value 1.

3. A curable composition according to either of Claims 1 and 2 further characterised in that each polysiloxane of the mixture of polysiloxanes having units of the general formula (i) is according to the general formula R₂R'SiO [R'RSiO]ₙ [R₂SiO]ₘ SiR'R₂ wherein m has a value from 1 to 1000 and n has a value from 0 to 100.

4. A curable composition according to Claim 3 further characterised in that the mixture of polysiloxanes according to the general formula R₂R'SiO[R'RSiO]ₙ[R₂SiO]ₘSiR'R₂ comprises a polysiloxane in which n is 0 and m is 450 and a polysiloxane in which n is 3 and m is 147.

5. A curable composition according to either of Claims 1 and 2 further characterised in that one of the polysiloxanes of the mixture of polysiloxanes having units according to the general formula (i) RₐR'_{b}SiO_{[4(a + b)]/2} has not less than five units (i) in which R' represents a hexenyl group.

6. A curable composition according to either of Claims 1 and 2 further characterised in that the polysiloxane (A) having units of the general formula (ii) is according to the formula R_{c}H_{b}SiO [R₂SiO]ₚ [RHSiO]_{q} SiH_{b}R_{c} wherein b has a value 0 or 1, c has a value of 2 or 3, p has a value from 1 to 50 and q has a value 0 or 2 provided there are no more than two silicon-bonded hydrogen atoms per molecule.

7. A curable composition according to Claim 2 wherein the polysiloxane (B) having units according to the general formula (ii) is according to the formula R_{c}H_{b}SiO [R₂SiO]ₚ [RHSiO]_{q} SiH_{b}R_{c} wherein b has a value 0 or 1, c has a value of 2 or 3, p has a value from 1 to 50, q has a value from 1 to 20 and b + q is 2 or more provided there are at least 3 silicon-bonded hydrogen atoms per molecule.

8. A curable composition according to Claim 2 wherein the polysiloxanes having units according to the general formula (ii) are a mixture of polysiloxanes according to the formula R_{c}H_{b}SiO [R₂SiO]ₚ [RHSiO]_{q} SiH_{b}R_{c} comprising a polysiloxane (A) wherein b has a value 1, c has a value 2 and q has a value 0 and a polysiloxane (B) wherein b has a value 0, c has a value 3, q has a value 5 and p has a value 3.

9. A curable composition according to any of the preceding Claims further characterised in that the finely divided filler comprises precipitated silica having a particle size 0.01 to 1.0 µm or ground quartz having a particle size of 1.0 to 30 µm or a combination of these fillers.

10. A method of making a moulded article comprising the steps of applying to an original and curing thereon a composition according to any of the preceding Claims.

## Patentansprüche

1. Härtbare Zusammensetzung, umfassend ein Polysiloxan, das Einheiten der folgenden Formel (i) enthält
RₐR'_{b}SiO_{[4-(a + b)]/2}
wobei nicht weniger als zwei Gruppen R' pro Molekül vorhanden sind, ein Polysiloxan (A), das Einheiten der allgemeinen Formel (ii) enthält
RₐH_{b}SiO_{[}_{4-(a + b)]/2}
wobei nicht weniger als zwei Wasserstoffatome pro Molekül vorhanden sind, einen feinteiligen Füllstoff und einen Edelmetallkatalysator, worin R eine einwertige Kohlenwasserstoffgruppe bedeutet, R' eine aliphatische ungesättigte Gruppe ist, a einen Wert von 1, 2 oder 3 hat und b für einen Wert von 0 oder 1 steht, dadurch gekennzeichnet, daß das Polysiloxan mit Einheiten der allgemeinen Formel (i) ein Gemisch aus Polysiloxanen mit Viskositäten bei 25°C von nicht über 10 Pa·s ist, wovon eines nicht mehr als zwei Einheiten aufweist, worin b für den Wert 1 steht, und das andere nicht mehr als drei Einheiten aufweist, worin b den Wert 1 hat,
das Polysiloxan (A) mit Einheiten der allgemeinen Formel (ii) ein Polysiloxan mit einer Viskosität bei 25°C von nicht über 0,2 Pa·s ist, welches nicht mehr als zwei Einheiten enthält, worin b für den Wert 1 steht, und
das Gemisch aus Polysiloxanen in der härtbaren Zusammensetzung eine Viskosität bei 25°C von weniger als 20 Pa·s hat.

2. Härtbare Zusammensetzung nach Anspruch 1, dadurch gekennzeichnet, daß die härtbare Zusammensetzung ferner ein Polysiloxan (B) enthält, das Einheiten der folgenden allgemeinen Formel (ii) aufweist
RₐH_{b}SiO_{[4-(a + b)]/2}
eine Viskosität bei 25°C von nicht über 10 Pa·s hat und nicht weniger als drei Einheiten enthält, worin b einen Wert von 1 hat.

3. Härtbare Zusammensetzung nach einem der Ansprüche 1 oder 2, dadurch gekennzeichnet, daß jedes Polysiloxan des Gemisches aus Polysiloxanen mit Einheiten der allgemeinen Formel (i) der folgenden allgemeinen Formel entspricht
R₂R'SiO [R'SiO]ₙ [R₂SiO]ₘ SiR'R₂
worin m einen Wert von 1 bis 1000 hat und n für einen Wert von 0 bis 100 steht.

4. Härtbare Zusammensetzung nach Anspruch 3, dadurch gekennzeichnet, daß das Gemisch aus Polysiloxanen der allgemeinen Formel
R₂R'SiO [R'RSiO]ₙ [R₂SiO]ₘ SiR'R₂
ein Polysiloxan, worin n für 0 steht und m für 450 steht, und ein Polysiloxan, worin n für 3 steht und m für 147 steht, enthält.

5. Härtbare Zusammensetzung nach einem der Ansprüche 1 oder 2, dadurch gekennzeichnet, daß eines der Polysiloxane des Gemisches aus Polysiloxanen mit Einheiten der folgenden allgemeinen Formel (i)
RₐR'_{b}SiO_{[4-(a + b)]/2}
nicht weniger als fünf Einheiten (i) aufweist, worin R' eine Hexenylgruppe bedeutet.

6. Härtbare Zusammensetzung nach einem der Ansprüche 1 oder 2, dadurch gekennzeichnet, daß das Polysiloxan (A) mit Einheiten der allgemeinen Formel (ii) der folgenden Formel entspricht
R_{c}H_{b}SiO [R₂SiO]ₚ [RHSiO]_{q} SiH_{b}R_{c}
worin b einen Wert von 0 oder 1 hat, c für einen Wert von 2 oder 3 steht, p einen Wert von 1 bis 50 hat und q einen Wert von 0 oder 2 bedeutet, mit der Maßgabe, daß nicht mehr als zwei siliciumgebundene Wasserstoffatome pro Molekül vorhanden sind.

7. Härtbare Zusammensetzung nach Anspruch 2, worin das Polysiloxan (B) mit Einheiten der allgemeinen Formel (ii) der folgenden Formel entspricht
R_{c}H_{b}SiO [R₂SiO]ₚ [RHSiO]_{q} SiH_{b}R_{c}
worin b einen Wert von 0 oder 1 hat, c für einen Wert von 2 oder 3 steht, p einen Wert von 1 bis 50 hat, g einen Wert von 1 bis 20 bedeutet und b + q für 2 oder mehr steht, mit der Maßgabe, daß wenigstens drei siliciumgebundene Wasserstoffatome pro Molekül vorhanden sind.

8. Härtbare Zusammensetzung nach Anspruch 2, worin die Polysiloxane mit Einheiten der allgemeinen Formel (ii) ein Gemisch aus Polysiloxanen der folgenden allgemeinen Formel sind
R_{c}H_{b}SiO [R₂SiO]ₚ [RHSiO]_{q} SiH_{b}R_{c}
enthaltend ein Polysiloxan (A), worin b einen Wert von 1 hat, c ein Wert von 2 ist und q einen Wert von 0 hat, und ein Polysiloxan (B), worin b einen Wert von 0 hat, c einen Wert von 3 aufweist, q einen Wert von 5 besitzt und p einen Wert von 3 hat.

9. Härtbare Zusammensetzung nach einem der vorhergehenden Ansprüche, dadurch gekennzeichnet, daß der feinteilige Füllstoff gefälltes Siliciumdioxid mit einer Teilchengröße von 0,01 bis 1,0 µm oder gemahlenen Quarz mit einer Teilchengröße von 1,0 bis 30 µm oder eine Kombination dieser Füllstoffe umfaßt.

10. Verfahren zur Herstellung eines Formgegenstands durch Aufbringen einer Zusammensetzung nach einem der vorhergehenden Ansprüche auf ein Original und anschließende Härtung der Zusammensetzung.

## Revendications

1. Une composition durcissable comprenant un polysiloxane comprenant des motifs selon la formule (i) RₐR'_{b}SiO_{[4-(a + b)]/2}, chaque molécule ne contenant pas moins de deux groupes R', un polysiloxane (A) comprenant des motifs selon la formule générale (ii) RₐH_{b}SiO_{[4-(a + b)]/2}, chaque molécule ne contenant pas moins de deux groupes H, une charge finement divisée et un catalyseur au métal noble, où R représente un groupe hydrocarboné monovalent, R' représente un groupe aliphatique insaturé, la valeur de a est 1, 2 ou 3 et la valeur de b est 0 ou 1, caractérisée en ce que :
le polysiloxane ayant des motifs selon la formule générale (i) comprend un mélange de polysiloxanes ayant des viscosités à 25°C non supérieures à 10 Pa.s, l'un n'ayant pas plus de deux motifs dans lesquels la valeur de b est 1 et un autre n'ayant pas moins de trois motifs dans lesquels la valeur de b est 1 ;
le polysiloxane (A) ayant des motifs selon la formule générale (ii) est un polysiloxane ayant une viscosité à 25°C non supérieure à 0,2 Pa.s, n'ayant pas plus de deux motifs dans lesquels la valeur de b est 1 ; et
le mélange de polysiloxanes dans la composition durcissable a une viscosité inférieure à 20 Pa.s à 25°C.

2. Une composition durcissable selon la revendication 1, caractérisée de plus en ce que la composition durcissable comprend également un polysiloxane (B) ayant des motifs selon la formule générale (ii) RₐH_{b}SiO_{[4-(a + b)]/2}, une viscosité à 25°C non supérieure à 10 Pa.s et n'ayant pas moins de trois motifs dans lesquels la valeur de b est de 1.

3. Une composition durcissable selon l'une ou l'autre des revendications 1 et 2, caractérisée de plus en ce que chaque polysiloxane du mélange de polysiloxanes ayant des motifs de la formule générale (i) répond à la formule générale R₂R'SiO[R'RSiO]ₙ[R₂SiO]ₘSiR'R₂ où la valeur de m est de 1 à 1000 et la valeur de n est de 0 à 100.

4. Une composition durcissable selon la revendication 3, caractérisée de plus en ce que le mélange de polysiloxanes répondant à la formule générale R₂R'SiO[R'RSiO]ₙ[R₂SiO]ₘSiR'R₂ comprend un polysiloxane dans lequel n est 0 et m est 450 et un polysiloxane dans lequel n est 3 et m est 147.

5. Une composition durcissable selon l'une ou l'autre des revendications 1 et 2, caractérisée de plus en ce que l'un des polysiloxanes du mélange de polysiloxanes ayant des motifs selon la formule générale (i) RₐR'_{b}SiO_{[4-(a + b)]/2} possède au moins cinq motifs (i) où R' représente un groupe hexényle.

6. Une composition durcissable selon l'une ou l'autre des revendications 1 et 2, caractérisée de plus en ce que le polysiloxane (A) ayant des motifs de la formule générale (ii) répond à la formule R_{c}H_{b}SiO [R₂SiO]ₚ[RHSiO]_{q}SiH_{b}R_{c} où la valeur de b est 0 ou 1, la valeur de c est 2 ou 3, la valeur de p est de 1 à 50 et la valeur de q est 0 ou 2, à condition qu'il n'y ait pas plus de deux atomes d'hydrogène liés au silicium par molécule.

7. Une composition durcissable selon la revendication 2, dans laquelle le polysiloxane (B) ayant des motifs selon la formule générale (ii) répond à la formule R_{c}H_{b}SiO[R₂SiO]ₚ[RHSiO]_{q}SiH_{b}R_{c} où la valeur de b est 0 ou 1, la valeur de c est 2 ou 3, la valeur de p est de 1 à 50, la valeur de g est de 1 à 20 et la valeur de b + g est d'au moins 2, à condition qu'il y ait au moins 3 atomes d'hydrogène liés au silicium par molécule.

8. Une composition durcissable selon la revendication 2, dans laquelle les polysiloxanes ayant des motifs selon la formule générale (ii) sont un mélange de polysiloxanes selon la formule R_{c}H_{b}SiO[R₂SiO]ₚ[RHSiO]_{q}SiH_{b}R_{c} comprenant un polysiloxane (A) dans lequel la valeur de b est 1, la valeur de c est 2 et la valeur de q est 0, et un polysiloxane (B) dans lequel la valeur de b est 0, la valeur de c est 3, la valeur de q est 5 et la valeur de p est 3.

9. Une composition durcissable selon l'une quelconque des revendications précédentes, caractérisée de plus en ce que la charge finement divisée comprend de la silice précipitée ayant une taille de particules de 0,01 à 1,0 µm ou du quartz broyé ayant une taille de particules de 1,0 à 30 µm, ou une association de ces charges.

10. Un procédé de fabrication d'un article moulé, comprenant les étapes d'application à un original et de durcissement sur celui-ci d'une composition selon l'une quelconque des revendications précédentes.
